# EUROPEAN PATENT SPECIFICATION

(11) **EP 3 414 928 B1**
(45) Date of publication and mention of the grant of the patent: **14.10.2020**
(21) Application number: 16704194.6
(22) Date of filing: 11.02.2016
(51) Int. Cl.: H04W 12/06

(54) **SECURITY IN ISOLATED LTE NETWORKS**
SICHERHEIT IN ISOLIERTEN LTE-NETZWERKEN
SÉCURITÉ DANS LES RÉSEAUX LTE ISOLÉS

(43) Date of publication of application: 19.12.2018
(73) Proprietor: Nokia Solutions and Networks Oy, 02610 Espoo (FI)
(72) Inventor: JERICHOW, Anja, 85567 Grafing (DE); HORN, Guenther, 80331 Munich (DE)
(74) Representative: Nokia EPO representatives
(86) International application number: PCT/EP2016/052892
(87) International publication number: WO 2017/137081

(56) References cited:
- WO-A1-2015/166099
- SAMSUNG: "Authentication Mechanism for IOPS No Backhaul Case", 3GPP DRAFT; S3-151399-IOPS-SOL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Nanjing; 20150420 - 20150424 19 April 2015 (2015-04-19), XP050943601, Retrieved from the Internet: URL:http://www.3gpp.org/ftp/Meetings_3GPP_ SYNC/SA3/Docs/ [retrieved on 2015-04-19]
- "3rd Generation Partnership Project; Technical Specification Group Services and System Aspects; 3GPP System Architecture Evolution (SAE); Security architecture (Release 13)", 3GPP STANDARD; 3GPP TS 33.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V13.1.0, 18 December 2015 (2015-12-18), pages 1-135, XP051047124, [retrieved on 2015-12-18]

## Description

### Field of the invention

The present invention relates to apparatuses, methods, systems, computer programs, computer program products and computer-readable media regarding security in isolated LTE networks.

### Abbreviations and Definitions (cf. for example, document [1]) :

- AK: Anonymity key
- AKA: Authentication and Key Agreement
- AUTN: Authentication token
- AV: Authentication Vector
- ASME: Access Security Management Entity
- BTS: Base Transceiver Station
- CK: Cypher Key
- EPC: Evolved Packet Core
- HSS: Home Subscriber Server
- IMSI: International Mobile Subscriber Identity
- IOPS: Isolated operation of E-UTRAN in public safety
- IK: Integrity Key
- FBSA: FlexiBTS Server module, version A
- KDF: Key Derivation Function
- Local MME: component of the local EPC in an IOPS network
- LTE: Long Term Evolution
- PS UE: public safety UE (an IOPS-capable UE) that can be operated in an IOPS network
- RAND: Random Number
- RES: Response
- SQN: Sequence Number
- SN ID: Serving Network Identifier
- USIM: Universal Subscriber Identity Module
- UTRAN: Universal Terrestrial Radio Access Network
- XRES: Expected Response

Access Security Management Entity: entity which receives the top-level keys in an access network from the HSS. For E-UTRAN access networks, the role of the ASME is assumed by the MME.

lOPS-capable eNB: an eNB that has the capability of IOPS mode operation, which provides a local IP connectivity and public safety services to the UEs via Local EPS-Authentication Vector: K_{ASME}, RAND, AUTN, XRES

EPC when the eNB has lost backhaul to the Macro EPC or it has no backhaul to the Macro EPC.

IOPS-enabled UE: is an UE that is configured to use networks operating in IOPS mode.

IOPS network: an IOPS network consists of one or more eNBs operating in IOPS mode and connected to a Local EPC.

Local EPC: the Local EPC is an entity which provides functionality that eNBs in IOPS mode of operation use, instead of the Macro EPC, in order to support public safety services. The local EPC includes a local MME.

Local IP connectivity: IP address assignment and local routing provided in the IOPS network.

Macro EPC: the EPC which serves an eNB in normal mode of operation. The macro EPC includes a macro HSS.

### Background of the invention

Generally, the field of technology of the present inveniton is isolated LTE networks, be they for public safety use or for commercial use.

The background for public safety operations in isolated E-UTRAN scenarios can be found in document [1] (3GPP TR 23.797 "Study on architecture enhancements to support Isolated E-UTRAN Operation for Public Safety") and document [2] (3GPP TS 22.346 "Isolated Evolved Universal Terrestrial Radio Access Network (E-UTRAN) operation for public safety; Stage 1"(requirements)). Rel-13 IOPS architecture solution for isolated LTE operation with no backhaul is documented in 3GPP TS 23.401 [8].

Security key issues and a solution for a USIM dedicated for isolated LTE operation only (i.e. the USIM for local EPC is different to any USIM used for macro EPC usage without deviation of the existing LTE security procedures are provided by a local HSS when in IOPS mode) are defined in 3GPP TR 33.897 [3]. The solution is also documented in 3GPP TS 33.401 [4]. Limitation of this Rel-13 solution is that only the no backhaul use case has been considered and that the IOPS network will only work with pre-configured IOPS-capable UEs and that a specific USIM for IOPS mode is needed that is not used in normal operation.

Apart from public safety use cases, customers also request for non-public safety use cases. Regarding standardisation work for isolated LTE networks for commercial use, a new work item was discussed in 3GPP SA1 with the work item name "SALTE" (Secondary Access to LTE). One objective of SALTE is "Authentication & registration for access to a SALTE network by the HPLMN". Another approach to address also commercial aspects is taken by the MuLTEfire Alliance, an industry association promoting an LTE-based technology for small cells operating solely in unlicensed spectrum, which will deliver enhanced performance in local area network deployments. Also here the isolated LTE network can be included.

3GPP Rel-14 standardization has already seen proposals to extend the scope by scenarios with limited backhaul and with backhaul. But security so far has only be specified for no backhaul.

As the present invention is applicable to commercial variants of isolated LTE networks as well as to public safety networks, like IOPS, in the following description, the general term "isolated LTE networks" is used.

### References:

[1]: 3GPP TR 23.797
[2]: 3GPP TS 22.346
[3]: 3GPP TR 23.897
[4]: 3GPP TS 33.401
[5]: https://www.schneier.com/blog/archives/2014/12/ss7_vulnerabili.html
[6]: http://events.ccc.de/congress/2014/Fahrplan/events/6249.html
[7]: http://events.ccc.de/congress/2014/Fahrplan/events/6122.html
[8]: 3GPP TS 23.401

WO 2015/166099 A1 is further prior art.

### Summary of the Invention

The present invention is defined by the appended independent claims 1, 8, and 14.

It is therefore an object of the present invention to overcome the above mentioned limitations and to provide apparatuses, methods, systems, computer programs, computer program products and computer-readable media regarding security in isolated LTE networks.

According to an aspect of the present invention there is provided a method comprising:
receiving, at a network element, a message from a management entity,
determining, at the network element, a class of a radio network to which the management entity belongs,
selecting a function for generating an authentication key based on the determined class, and
generating the authentication key using the selected function.

According to another aspect of the present invention there is provided an apparatus for use in a network element, comprising:
at least one processor,
and
at least one memory for storing instructions to be executed by the processor, wherein
the at least one memory and the instructions are configured to, with the at least one processor, cause the apparatus at least to perform:
   receiving, at a network element, a message from a management entity,
   determining, at the network element, a class of a radio network to which the management entity belongs,
   selecting a function for generating an authentication key based on the determined class, and
   generating the authentication key using the selected function.

According to another aspect of the present invention there is provided a computer program product comprising code means adapted to produce steps of any of the methods as described above when loaded into the memory of a computer.

According to a still further aspect of the invention there is provided a computer program product as defined above, wherein the computer program product comprises a computer-readable medium on which the software code portions are stored.

According to a still further aspect of the invention there is provided a computer program product as defined above, wherein the program is directly loadable into an internal memory of the processing device.

According to a still further aspect of the present invention there is provided an apparatus comprising:
means for receiving, at a network element, a message from a management entity,
means for determining, at the network element, a class of a radio network to which the management entity belongs,
means for selecting a function for generating an authentication key based on the determined class, and
means for generating the authentication key using the selected function.

### Brief Description of the Drawings

These and other objects, features, details and advantages will become more fully apparent from the following detailed description of aspects/embodiments of the present invention which is to be taken in conjunction with the appended drawings, in which:
Fig. 1 is a flowchart illustrating an example of a method according to some example versions of the present invention.
Fig. 2 is a block diagram illustrating an example of an apparatus according to some example versions of the present invention.

### Detailed Description

In the following, some example versions of the disclosure and embodiments of the present invention are described with reference to the drawings. For illustrating the present invention, the examples and embodiments will be described in connection with a cellular communication network based on a 3GPP based communication system, for example an LTE/LTE-A based system. However, it is to be noted that the present invention is not limited to an application using such types of communication systems or communication networks, but is also applicable in other types of communication systems or communication networks, like for example 5G communication networks and the like.

The following examples versions and embodiments are to be understood only as illustrative examples. Although the specification may refer to "an", "one", or "some" example version(s) or embodiment(s) in several locations, this does not necessarily mean that each such reference is to the same example version(s) or embodiment(s), or that the feature only applies to a single example version or embodiment. Single features of different embodiments may also be combined to provide other embodiments. Furthermore, words "comprising" and "including" should be understood as not limiting the described embodiments to consist of only those features that have been mentioned and such example versions and embodiments may also contain also features, structures, units, modules etc. that have not been specifically mentioned.

The basic system architecture of a communication network where examples of embodiments of the invention are applicable may comprise a commonly known architecture of one or more communication systems comprising a wired or wireless access network subsystem and a core network. Such an architecture may comprise one or more communication network control elements, access network elements, radio access network elements, access service network gateways or base transceiver stations, such as a base station (BS), an access point or an eNB, which control a respective coverage area or cell and with which one or more communication elements or terminal devices such as a UE or another device having a similar function, such as a modem chipset, a chip, a module etc., which can also be part of a UE or attached as a separate element to a UE, or the like, are capable to communicate via one or more channels for transmitting several types of data. Furthermore, core network elements such as gateway network elements, policy and charging control network elements, mobility management entities, operation and maintenance elements, and the like may be comprised.

The general functions and interconnections of the described elements, which also depend on the actual network type, are known to those skilled in the art and described in corresponding specifications, so that a detailed description thereof is omitted herein. However, it is to be noted that several additional network elements and signaling links may be employed for a communication to or from a communication element or terminal device like a UE and a communication network control element like a radio network controller, besides those described in detail herein below.

The communication network is also able to communicate with other networks, such as a public switched telephone network or the Internet. The communication network may also be able to support the usage of cloud services. It should be appreciated that BSs and/or eNBs or their functionalities may be implemented by using any node, host, server or access node etc. entity suitable for such a usage.

Furthermore, the described network elements and communication devices, such as terminal devices or user devices like UEs, communication network control elements of a cell, like a BS or an eNB, access network elements like APs and the like, network access control elements like AAA servers and the like, as well as corresponding functions as described herein may be implemented by software, e.g. by a computer program product for a computer, and/or by hardware. In any case, for executing their respective functions, correspondingly used devices, nodes or network elements may comprise several means, modules, units, components, etc. (not shown) which are required for control, processing and/or communication/signaling functionality. Such means, modules, units and components may comprise, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means comprising e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors.

One of the proposals captured in 3GPP TR 33.897 [3] is the addition of a protocol between local MME and main (macro) HSS such that the local MME can also request authentication vectors (AVs) from the macro HSS. The idea is to request pro-actively authentication vectors (AV), i.e. pro-actively means when the IOPS-capable UE has not attached at the local MME before.

In contrast to Rel-13 solution, where a dedicated USIM for IOPS is used, by this invention only one USIM in the UE would be sufficient for operation in macro and isolated LTE, i.e. allowing the UE to switch between macro MME and local MME.

Further, there has been proposed a mechanism to also support roaming users when using this pro-active requests the other way. That is, a macro MME recognizes UEs that are capable of isolated LTE network mode and pushes this information to a local MME whose attached eNBs are able to provide coverage for the UE.

This solution may work in certain scenarios, e.g. for UEs interested in paying extra for being served in isolated LTE networks for various reasons. But it may not be commercially viable in many other cases, e.g. when the operator of the isolated network has an interest that the user is attracted to it, e.g. in a shopping mall or a hotel.

Other commercial contexts for isolated LTE networks are envisaged to be e.g. a mining area, where the employees could be isolated. Future scenarios could also be shopping centers, where the consumers are temporarily locally served for advertisement purpose, e.g. participating at some quest or other event to win a voucher, and later switch back to a normal network mode. These use cases could be also served by other technologies, but integrating in LTE may be desirable due to the re-usage of the same USIM.

The present invention is based on the above mentioned proposals and further elaborates on the idea that the local EPC asks the macro HSS for AVs to be used in isolated LTE networks mode.

First, the AKA procedure as defined in document [4], section 6.1.1 will be shortly described.

After receiving a request from a UE to attach to an eNB in the isolated network, the corresponding local MME selects an authentication vector based on the IMSI of the UE and starts the AKA procedure. The local MME sends to the UE the random challenge RAND and an authentication token AUTN for network authentication from the selected authentication vector. The UE verifies the AUTN and, in case of a successful AUTN verification, the UE constructs a response RES from K_{ASME} and RAND, and sends an authentication response message including RES to the MME. The UE calculates the K_{ASME} from CK, IK, and the serving network identity SN id using the key derivation function (KDF), as defined in document [4], A.2. Then, the MME checks whether the RES received from the UE equals the expected response XRES, If RES equals XRES, the authentication is successful and the MME selects the corresponding K_{ASME} included in the AV sent to the UE. Here, the K_{ASME} calculated by the UE corresponds to the K_{ASME} selected by the MME (which has initially been provided by the HSS).

In view of the above, a user can be tricked into connecting to an isolated LTE network while believing to be connected to a normal LTE network. Such trickery could be achieved based on the following technical observations:
One observation is that isolated LTE networks, e.g. the local MMEs in such isolated LTE network, are more vulnerable to attack as they are more readily physically accessible as they reside in exposed locations, can be set up flexibly or it is attached to an eNB. This justifies special protection measures against attacks resulting from a compromise of such local MMEs in isolated LTE networks, as compared to regular MMEs.

Another observation is that, without introduction of the above mentioned proposals, the macro HSS has no information whether a UE intends to, or is allowed to, attach to an isolated LTE network or not. This is quite plausible for commercial isolated LTE networks as associations between UEs and such isolated LTE networks may be formed spontaneously. But it is also conceivable for public safety networks that the operators of such networks may not want to tell the membership of their networks to the home operator.

Hence, if macro HSS has no information about UEs capabilities to be allowed for isolated LTE networks operation, this opens ground for a serious attack as follows:
An attacker is able to compromise a local MME (which is located outside of the actual - assumed secure - radio network) in an isolated LTE network based on the observation above that local MMEs are more vulnerable. The compromised local MME now requests authentication vectors (AVs) from the macro HSS (which is part of the actual secure network).

The local MME can do so for any UE as it is the assumption that the macro HSS has no record telling which UE may attach to which isolated LTE network. Then, the HSS sends the AVs (K_{ASME}, RAND, AUTN, XRES) including the SN id to the local MME. The attacker that compromised the local MME may then feed the obtained AVs into a malicious isolated LTE network that may be realized e.g. as a so-called network-in-the-box mounted on a truck following targeted users around.

A malicious base station, which is part of the malicious isolated LTE network, may attract all UEs in cell range if a high enough signal is transmitted. It is true that the AVs contain the true Serving Network identity (SN id) of the local MME, and, hence, the malicious base station needs to transmit the same SN id; otherwise, the UE and the malicious network would not be able to establish security between them successfully as the SN id enters the computation of the cryptographic key K_{ASME} (cf. document [4]).

However, there will always be UEs that do not recognize the SN id as belonging to an isolated LTE network. Such UEs could, e.g. be legacy UEs from earlier releases or mis-implemented UEs that do not recognize from the structure of the SN id that this is an isolated LTE network; similarly, the isolated LTE network could belong to a newly introduced class whose SN id is yet unknown to UEs in the field. Such UEs will then believe they are seeing the SN id of a public network (PLMN). Although the UE contains a list of preferred networks, it cannot generally be assumed that this list is a complete list of all permitted networks. Hence, the UE is likely to connect to this network it falsely believes to be a PLMN, and not an isolated LTE network, if no other network seems to provide coverage.

In this way, authentication vectors stolen through one compromised local MME in one isolated LTE network may be used to lure users of e.g. legacy UEs or mis-implemented UEs to connect to movable malicious isolated LTE networks that can be put up at any location. The risk is that e.g. the users' traffic may be eavesdropped. Other attacks are also possible.

One partial possible solution for the problem is given by the above mentioned proposals, such that the macro HSS only accepts AV requests from local MMEs for those UEs (identified based on their IMSI, for example) that have been registered in the HSS as capable for isolated LTE networks operation. However, such registered UEs still can be tricked into connection to a compromised local MME in the above described manner.

Thus, certain aspects of the present invention aim at ensuring that a user cannot be tricked into connecting to an isolated LTE network while believing to be connected to a normal LTE network.

Generally, the solution according to certain aspect of the present invention is using differently generated K_{ASME} keys for public and isolated networks.

That is, certain aspects of the present invention are about generating the cryptographic key K_{ASME} used in LTE by means of key derivation functions (KDFs) that are different for isolated LTE networks and for public networks, respectively.

In a further refinement, it is proposed to use different KDFs for different classes of isolated LTE networks, e.g. one KDF for isolated LTE networks for public safety and another KDF for commercial uses.

The KDF used for public networks would be identical to the KDF already specified for LTE in 3GPP TS 33.401, Annex A.2; in this way, no backward compatibility problem would arise. Similarly, public safety networks using a separate USIM dedicated to this isolated LTE networks network could use this KDF as described in document [4], Annex A.2.

It is important to note here that the key K_{ASME} is generated in the HSS and cannot be modified in the (local or other) MME. Thus, since the key K_{ASME} is always generated in the (assumed secure) HSS, a malicious isolated network could not pretend anymore to be a public network.

When requesting the AVs (at the beginning of the attack), a local MME (be it malicious or authorized) would always receive a new K_{ASME} key for isolated networks as the HSS would recognize the local MME as a local one.

Later, if this obtained K_{ASME} key for isolated networks was used in the attack scenario explained above, the malicious network could not successfully fake a public network anymore. When actually pretending to be a public network, the UE would calculate the K_{ASME} key in the manner as described in 33.401 [4] for public networks. The obtained K_{ASME} key from the HSS, however, is one for isolated networks. As a result, the RES constructed by the UE and the XRES generated by the HSS would not match since different K_{ASME} keys would be used on both sides, which makes successful communication impossible and thus, protects the UE to attach to a malicious network.

It is assumed that the core signalling network, i.e. more precisely the S6a interface between MME and HSS, is not compromised, and that, consequently, the HSS can recognize from the request of a local MME that the local MME is part of an isolated LTE network.

However, this assumption cannot be taken for granted as recent published attacks on the SS7 network have shown (cf. documents [5], [6] and [7]), but the security of the core signalling network is a different problem altogether and is indispensable for the secure functioning of an LTE network. Any perceived problems related to the security of the core signalling network need therefore be addressed anyhow separately, and cannot be solved by the present invention.

The proposed mechanism would mitigate the attack because a UE believing to connect to a public network would use the KDF already specified for LTE in document [4], while the local MME under control of the attacker would obtain a K_{ASME} from the HSS that was computed using a different KDF as the HSS recognized that the request was coming from a local MME in an isolated LTE network.

In the following, the keys generated for the public networks are named K_{ASME} and the keys generated for isolated networks are named K*_{ASME}.

Then, the AKA procedure would be as follows.

The local MME sends a request for authentication vectors AVs to the HSS, in the same manner as set out above. This request includes the SN id of the IOPS network to which the local MME belongs. The HSS recognizes that the MME is a local MME of an isolated network and thus, generates the AVs including the new key K*_{ASME}. These AVs are sent to the local MME.

Then, after receiving a request from a UE to attach to an eNB in the isolated network, the corresponding local MME selects an authentication vector based on the IMSI of the UE and starts the AKA procedure, in the same manner as set out above.

Then, the UE calculates the key K_{ASME} from CK, IK, and the serving network identity SN id using a key derivation function (KDF). Further, in a similar manner as above, if the SN id is yet unknown to UE, the UE will then believe that it is seeing the SN id of a public network (PLMN), and the UE is likely to connect to this network it falsely believes to be a PLMN, and not an isolated LTE network, if no other network seems to provide coverage.

However, in such a case, according to certain aspects of the present invention, since the UE believes to connect to a public network, the UE uses a different KDF for calculating the K_{ASME} than the KDF which has been used by the HSS when requested by local MME to provision AVs. Namely, the UE uses the KDF as defined in document [4], A.2, whereas the HSS uses a different KDF (for calculating K*_{ASME}), which will be described later.

Thus, the key K*_{ASME} calculated by the HSS and held by the local MME and the key K_{ASME} calculated by the UE do not coincide and the security set-up fails.

That is, when the local MME actually pretends to be a public network, the UE would calculate the key K_{ASME} for public networks. The obtained key K*_{ASME} from the HSS, however, is one for isolated networks. Thus, different keys K_{ASME} (namely, K*_{ASME} and K_{ASME}) would be used on both sides, which makes successful communication impossible.

The same would be true if a UE believed to be connecting to one class of isolated LTE networks while in fact it was connecting to a different one.

HSS and UE must decide which class of isolated LTE network to use. These classes should be standardized such that a HSS can recognize by the SN id which class the isolated LTE network belongs to and therefore, the HSS can include the correct SN id in the K*_{ASME}. If the UE is not aware of any classes of SN ids pertaining to isolated LTE networks it will assume that the SN id pertains to a public network and use the KDF from the current version of document [4], Annex A.2.

In macro HSS and UE, the computation of K_{ASME} from CK, IK, SN id, SQN ⊕ AK is modified so that the local MME cannot manipulate this modified K*_{ASME} in such a way that it looks to the UE like a normal K_{ASME}with a given SN id.

One proposal is to use a different KDF for keys K*_{ASME} used in isolated LTE networks. Two examples how to modify the input parameters for K*_{ASME} are given below. Others are possible.
(1) K*_{ASME} is computed in HSS and UE as in document [4], A.2, with the following exception:
   The value 'SN id' is subjected to a permutation of bits before being input to the KDF as described in document [4], A.2. Further, different permutations can be applied for different classes of isolated LTE networks, thus leading to different KDFs for the key K*_{ASME} for these different classes, if desired.
   One example of a permutation of bits is shifting the bits n times in a circular fashion. Other examples of permutations are possible.
(2) The order of the inputs to the hash function are changed. That is, K*_{ASME} is for example computed with CK||IK (|| means concatenation) as input key and P0 = SQN ⊕ AK (⊕ means Bitwise Exclusive Or (XOR) operation); P1 = SN id as input S. In contrast thereto, as described in document [4], A.2, K_{ASME} is computed with CK|| IK as input key and P0 = SN id; P1 = SQN ⊕ AK as input S.

The local MME does not know CK, IK, hence cannot compute K*_{ASME}. However, it is noted that this method (2) allows to obtain only one additional KDF.

It is further noted that the modification of the KDF is not limited to the above mentioned methods and that many other examples of modifying the KDF for computing the key K*_{ASME}, depending on the class of isolated LTE network, are possible. The only important aspect is that they lead to results different from the computation specified in document [4], A.2.

Thus, according to the aspects of the present invention as set out above, the attack as described above is mitigated. Further, assumptions that cannot be generally made, such as marking the authorization of subscriptions to connect to particular isolated LTE networks, in particular commercials ones, are avoided.

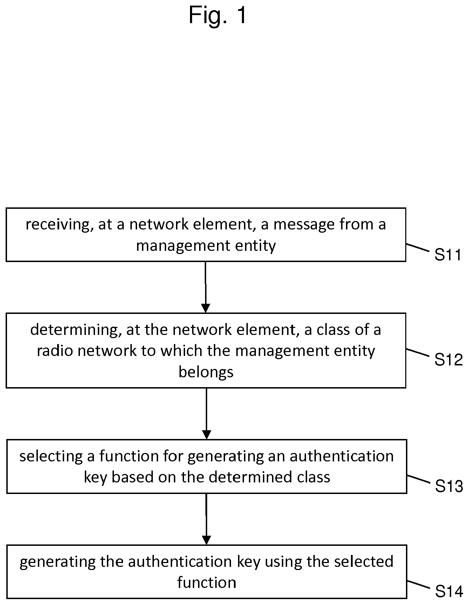

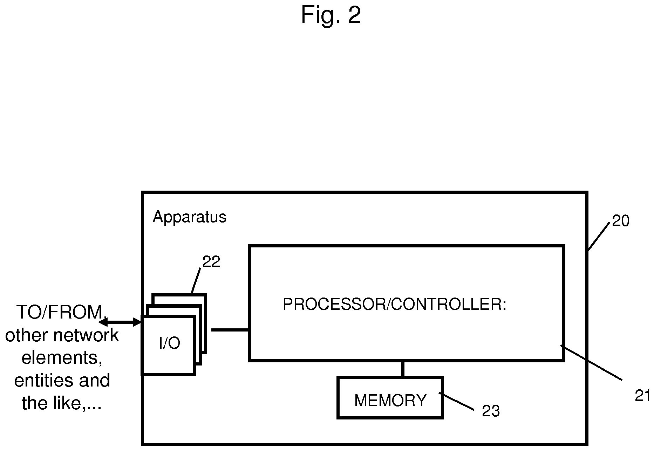

In the following, a more general description of example versions of the present invention is made with respect to Figs. 1 and 2.

Fig. 1 is a flowchart illustrating an example of a method according to some example versions of the present invention.

According to example versions of the present invention, the method may be implemented in or may be part of a network element, like for example, a Home Subscriber Server (HSS), a User Equipment (UE) or the like. The method comprises receiving, at a network element, a message from a management entity in a step S11, determining, at the network element, a class of a radio network to which the management entity belongs in a step S12, selecting a function for generating an authentication key based on the determined class in a step S13, and generating the authentication key using the selected function in a step S14.

According to some example versions of the present invention, the class of the radio network is determined based on a network identifier of the radio network included in the message.

According to some example versions of the present invention, the class of the radio network includes at least a first class of a standard radio network and a second class of at least one local radio network.

According to some example versions of the present invention, the management entity is a macro management entity of the standard radio network or a local management entity of a local radio network including an isolated radio network.

According to some example versions of the present invention, the authentication key for the first class of radio network and for each of the at least one second class of the local radio network is generated using a different function.

According to some example versions of the present invention, the network element is a home subscriber server, and the message is a request for an authentication vector, and the method further comprises transmitting the authentication key to the management entity.

According to some example versions of the present invention, the network element is a user equipment, and the message received from the management entity is a user authentication request.

According to some example versions of the present invention, the user authentication request includes an authentication token generated by a server, and the method further comprises constructing an authentication response based on the generated authentication key and the authentication token, and transmitting the constructed authentication response to the management entity.

According to some example versions of the present invention, the management entity compares the authentication response with an expected authentication response generated by the server.

According to some example versions of the present invention, a communication between the user equipment and the management entity is prohibited, if the authentication response received from the user equipment and the expected authentication response generated by the server do not coincide.

Fig. 2 is a block diagram illustrating an example of an apparatus according to some example versions of the present invention.

In Fig. 2, a block circuit diagram illustrating a configuration of an apparatus 20 is shown, which is configured to implement the above described aspects of the invention. It is to be noted that the apparatus 20 shown in Fig. 2 may comprise several further elements or functions besides those described herein below, which are omitted herein for the sake of simplicity as they are not essential for understanding the invention. Furthermore, the apparatus may be also another device having a similar function, such as a chipset, a chip, a module etc., which can also be part of an apparatus or attached as a separate element to the apparatus, or the like.

The apparatus 20 may comprise a processing function or processor 21, such as a CPU or the like, which executes instructions given by programs or the like. The processor 21 may comprise one or more processing portions dedicated to specific processing as described below, or the processing may be run in a single processor. Portions for executing such specific processing may be also provided as discrete elements or within one or further processors or processing portions, such as in one physical processor like a CPU or in several physical entities, for example. Reference sign 22 denotes transceiver or input/output (I/O) units (interfaces) connected to the processor 21. The I/O units 22 may be used for communicating with one or more other network elements, entities, terminals or the like. The I/O units 22 may be a combined unit comprising communication equipment towards several network elements, or may comprise a distributed structure with a plurality of different interfaces for different network elements. The apparatus 20 further comprises at least one memory 23 usable, for example, for storing data and programs to be executed by the processor 21 and/or as a working storage of the processor 21.

The processor 21 is configured to execute processing related to the above described aspects.

In particular, the apparatus 20 may be implemented in or may be part of a network element, like for example, a Home Subscriber Server (HSS), a User Equipment (UE) or the like, and may be configured to perform a method as described in connection with Fig. 1. Thus, the processor 21 is configured to perform receiving, at the network element, a message from a management entity, determining, at the network element, a class of a radio network to which the management entity belongs, selecting a function for generating an authentication key based on the determined class, and generating the authentication key using the selected function.

For further details regarding the functions of the apparatus 20, reference is made to the description of the methods according to some example versions of the present invention as described in connection with Fig. 1.

Thus, it is noted that the apparatus for use in a MME, and the apparatus for use in a UE, generally have the same structural components, wherein these components are configured to execute the respective functions of the network elements, i.e. the management entity and the user equipment, respectively, as set out above.

In the foregoing exemplary description of the apparatus, only the units/means that are relevant for understanding the principles of the invention have been described using functional blocks. The apparatus may comprise further units/means that are necessary for its respective operation, respectively. However, a description of these units/means is omitted in this specification. The arrangement of the functional blocks of the apparatus is not construed to limit the invention, and the functions may be performed by one block or further split into sub-blocks.

When in the foregoing description it is stated that the apparatus (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

For the purpose of the present invention as described herein above, it should be noted that
- method steps likely to be implemented as software code portions and being run using a processor at an apparatus (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the aspects/embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the aspects/embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Fieldprogrammable Gate Arrays) components, CPLD (Complex Programmable Logic Device) components or DSP (Digital Signal Processor) components;

- devices, units or means (e.g. the above-defined apparatuses, or any one of their respective units/means) can be implemented as individual devices, units or means, but this does not exclude that they are implemented in a distributed fashion throughout the system, as long as the functionality of the device, unit or means is preserved;
- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present invention. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

It is noted that the aspects/embodiments and general and specific examples described above are provided for illustrative purposes only and are in no way intended that the present invention is restricted thereto. Rather, it is the intention that all variations and modifications which fall within the scope of the appended claims are covered.

## Claims

1. A method, comprising:
receiving, at a network element, a message from a management entity, determining, at the network element, a class of a radio network to which the management entity belongs, the class of the radio network including a class of a public radio network and at least one class of an isolated radio network,
selecting, at the network element, from multiple key derivation functions, a key derivation function for generating an authentication key based on the determined class of the radio network, the multiple key derivation functions being different for the class of the public radio network and each of the at least one class of the isolated radio network, and
generating, at the network element, the authentication key using the selected key derivation function.

2. The method according to claim 1, wherein
the class of the radio network is determined based on a network identifier of the radio network included in the message.

3. The method according to claim 1 or 2, wherein
the management entity is a macro management entity of the public radio network or a local management entity of an isolated radio network.

4. The method according to any of claims 1 to 3, wherein
the network element is a home subscriber server, and
the message is a request for an authentication vector,
the method further comprising:
transmitting the authentication key to the management entity.

5. The method according to any one of claims 1 to 3, wherein
the network element is a user equipment, and
the message received from the management entity is a user authentication request.

6. The method according to claim 5, wherein
the user authentication request includes an authentication token generated by a server, and
the method further comprises, by the network element:
constructing an authentication response based on the generated authentication key and the authentication token, and
transmitting the constructed authentication response to the management entity.

7. The method according to claim 6, wherein the method further comprises:
comparing, by the management entity, the authentication response with an expected authentication response generated by the server, and
prohibiting a communication between the network element and the management entity, if the authentication response received from the network element and the expected authentication response generated by the server do not coincide.

8. A network element, comprising:
means for receiving a message from a management entity,
means for determining a class of a radio network to which the management entity belongs, the class of the radio network including a class of a public radio network and at least one class of an isolated radio network,
means for selecting, from multiple key derivation functions, a key derivation function for generating an authentication key based on the determined class of the radio network, the multiple key derivation functions being different for the class of the public radio network and each of the at least one class of the isolated radio network, and
means for generating the authentication key using the selected key derivation function.

9. The network element according to claim 8, wherein
the class of the radio network is determined based on a network identifier of the radio network included in the message.

10. The network element according to claim 8 or 9, wherein
the management entity is a macro management entity of the public radio network or a local management entity of an isolated radio network.

11. The network element according to any of claims 8 to 10, wherein
the network element is a home subscriber server, and
the message is a request for an authentication vector,
and wherein the apparatus further comprises:
means for transmitting the authentication key to the management entity.

12. The network element according to any one of claims 8 to 10, wherein
the network element is a user equipment, and
the message received from the management entity is a user authentication request.

13. The network element according to claim 12, wherein
the user authentication request includes an authentication token generated by a server, and
wherein the apparatus further comprises:
means for constructing an authentication response based on the generated authentication key and the authentication token, and
means for transmitting the constructed authentication response to the management entity.

14. A computer program product including a program for a processing device, comprising software code portions for performing the method of any one of claims 1 to 7 when the program is run on the processing device.

## Patentansprüche

1. Verfahren, das Folgendes umfasst:
Empfangen, an einem Netzelement, einer Nachricht von einer Verwaltungsentität,
Bestimmen, an dem Netzelement, einer Klasse eines Funknetzes, zu dem die Verwaltungsentität gehört, wobei die Klasse des Funknetzes eine Klasse eines öffentlichen Funknetzes und wenigstens eine Klasse eines isolierten Funknetzes beinhaltet,
Auswählen, an dem Netzelement, einer Schlüsselableitungsfunktion zum Erzeugen eines Authentifizierungsschlüssels aus mehreren Schlüsselableitungsfunktionen basierend auf der bestimmten Klasse des Funknetzes, wobei die mehreren Schlüsselableitungsfunktionen für die Klasse des öffentlichen Funknetzes und jede der wenigstens einen Klasse des isolierten Funknetzes verschieden sind, und
Erzeugen, an dem Netzelement, des Authentifizierungsschlüssels unter Verwendung der ausgewählten Schlüsselableitungsfunktion.

2. Verfahren nach Anspruch 1, wobei
die Klasse des Funknetzes basierend auf einer in der Nachricht enthaltenen Netzkennung des Funknetzes bestimmt wird.

3. Verfahren nach Anspruch 1 oder 2, wobei die Verwaltungsentität eine Makroverwaltungsentität des öffentlichen Funknetzes oder eine lokale Verwaltungsentität eines isolierten Funknetzes ist.

4. Verfahre nach einem der Ansprüche 1 bis 3, wobei das Netzelement ein Home Subscriber Server ist, und
die Nachricht eine Anforderung für einen Authentifizierungsvektor ist,
wobei das Verfahren ferner Folgendes umfasst:
Übertragen des Authentifizierungsschlüssels an die Verwaltungsentität.

5. Verfahren nach einem der Ansprüche 1 bis 3, wobei das Netzelement ein Benutzergerät ist, und
die von der Verwaltungsentität empfangene Nachricht eine Benutzerauthentifizierungsanforderung ist.

6. Verfahren nach Anspruch 5, wobei
die Benutzerauthentifizierungsanforderung einen Authentifizierungs-Token beinhaltet, der durch einen Server erzeugt wird, und
das Verfahren ferner Folgendes, durch das Netzelement, umfasst:
Konstruieren einer Authentifizierungsantwort basierend auf dem erzeugten Authentifizierungsschlüssel und dem Authentifizierungs-Token, und
Übertragen der konstruierten Authentifizierungsantwort an die Verwaltungsentität.

7. Verfahren nach Anspruch 6, wobei das Verfahren ferner Folgendes umfasst:
Vergleichen, durch die Verwaltungsentität, der Authentifizierungsantwort mit einer erwarteten Authentifizierungsantwort, die durch den Server erzeugt wird, und
Verhindern einer Kommunikation zwischen dem Netzelement und der Verwaltungsentität, falls die von dem Netzelement empfangene Authentifizierungsantwort und die durch den Server erzeugte Authentifizierungsantwort nicht übereinstimmen.

8. Netzelement, das Folgendes umfasst:
Mittel zum Empfangen einer Nachricht von einer Verwaltungsentität,
Mittel zum Bestimmen einer Klasse eines Funknetzes, zu dem die Verwaltungsentität gehört, wobei die Klasse des Funknetzes eine Klasse eines öffentlichen Funknetzes und wenigstens eine Klasse eines isolierten Funknetzes beinhaltet,
Mittel zum Auswählen einer Schlüsselableitungsfunktion zum Erzeugen eines Authentifizierungsschlüssels aus mehreren Schlüsselableitungsfunktionen basierend auf der bestimmten Klasse des Funknetzes, wobei die mehreren Schlüsselableitungsfunktionen für die Klasse des öffentlichen Funknetzes und jede der wenigstens einen Klasse des isolierten Funknetzes verschieden sind, und
Mittel zum Erzeugen des Authentifizierungsschlüssels unter Verwendung der ausgewählten Schlüsselableitungsfunktion.

9. Netzelement nach Anspruch 8, wobei
die Klasse des Funknetzes basierend auf einer in der Nachricht enthaltenen Netzkennung des Funknetzes bestimmt wird.

10. Netzelement nach Anspruch 8 oder 9, wobei
die Verwaltungsentität eine Makroverwaltungsentität des öffentlichen Funknetzes oder eine lokale Verwaltungsentität eines isolierten Funknetzes ist.

11. Netzelement nach einem der Ansprüche 8 bis 10, wobei
das Netzelement ein Home Subscriber Server ist, und
die Nachricht eine Anforderung für einen Authentifizierungsvektor ist,
und wobei die Einrichtung ferner Folgendes umfasst:
Mittel zum Übertragen des Authentifizierungsschlüssels an die Verwaltungsentität.

12. Netzelement nach einem der Ansprüche 8 bis 10, wobei
das Netzelement ein Benutzergerät ist, und
die von der Verwaltungsentität empfangene Nachricht eine Benutzerauthentifizierungsanforderung ist.

13. Netzelement nach Anspruch 12, wobei die Benutzerauthentifizierungsanforderung einen Authentifizierungs-Token beinhaltet, der durch einen Server erzeugt wird, und
wobei die Einrichtung ferner Folgendes umfasst:
Mittel zum Konstruieren einer Authentifizierungsantwort basierend auf dem erzeugten Authentifizierungsschlüssel und dem Authentifizierungs-Token, und
Mittel zum Übertragen der konstruierten Authentifizierungsantwort an die Verwaltungsentität.

14. Computerprogrammprodukt, das ein Programm für eine Verarbeitungsvorrichtung beinhaltet, das Softwarecodeteile zum Durchführen des Verfahrens nach einem der Ansprüche 1 bis 7, wenn das Programm auf der Verarbeitungsvorrichtung ausgeführt wird, umfasst.

## Revendications

1. Procédé, comprenant :
la réception, au niveau d'un élément de réseau, d'un message depuis une entité de gestion,
la détermination, au niveau de l'élément de réseau, d'une classe d'un réseau de radiocommunication à laquelle l'entité de gestion appartient, la classe du réseau de radiocommunication incluant une classe d'un réseau de radiocommunication public et au moins une classe d'un réseau de radiocommunication isolé,
la sélection, au niveau de l'élément de réseau, parmi de multiples fonctions de dérivation de clé, d'une fonction de dérivation de clé destinée à générer une clé d'authentification d'après la classe déterminée du réseau de radiocommunication, les multiples fonctions de dérivation de clé étant différentes pour la classe du réseau de radiocommunication public et chacune de l'au moins une classe du réseau de radiocommunication isolé, et
la génération, au niveau de l'élément de réseau, de la clé d'authentification à l'aide de la fonction de dérivation de clé sélectionnée.

2. Procédé selon la revendication 1, dans lequel
la classe du réseau de radiocommunication est déterminée d'après un identifiant de réseau du réseau de radiocommunication inclus dans le message.

3. Procédé selon la revendication 1 ou 2, dans lequel l'entité de gestion est une macro-entité de gestion du réseau de radiocommunication public ou une entité locale de gestion d'un réseau de radiocommunication isolé.

4. Procédé selon l'une quelconque des revendications 1 à 3, dans lequel
l'élément de réseau est un serveur d'abonné résidentiel, et
le message est une demande d'un vecteur d'authentification,
le procédé comprenant en outre :
la transmission de la clé d'authentification à l'entité de gestion.

5. Procédé selon l'une quelconque des revendications 1 à 3, dans lequel
l'élément de réseau est un équipement utilisateur, et le message reçu depuis l'entité de gestion est une demande d'authentification d'utilisateur.

6. Procédé selon la revendication 5, dans lequel la demande d'authentification d'utilisateur inclut un jeton d'authentification généré par un serveur, et
le procédé comprend en outre, par l'élément de réseau :
la construction d'une réponse d'authentification d'après la clé d'authentification générée et le jeton d'authentification, et
la transmission de la réponse d'authentification construite à l'entité de gestion.

7. Procédé selon la revendication 6, le procédé comprenant en outre :
la comparaison, par l'entité de gestion, de la réponse d'authentification avec une réponse d'authentification attendue générée par le serveur, et
l'interdiction d'une communication entre l'élément de réseau et l'entité de gestion, si la réponse d'authentification reçue depuis l'élément de réseau et la réponse d'authentification attendue générée par le serveur ne coïncident pas.

8. Élément de réseau, comprenant :
un moyen de réception d'un message depuis une entité de gestion,
un moyen de détermination d'une classe d'un réseau de radiocommunication à laquelle l'entité de gestion appartient, la classe du réseau de radiocommunication incluant une classe d'un réseau de radiocommunication public et au moins une classe d'un réseau de radiocommunication isolé,
un moyen de sélection, parmi de multiples fonctions de dérivation de clé, d'une fonction de dérivation de clé destinée à générer une clé d'authentification d'après la classe déterminée du réseau de radiocommunication, les multiples fonctions de dérivation de clé étant différentes pour la classe du réseau de radiocommunication public et chacune de l'au moins une classe du réseau de radiocommunication isolé, et
un moyen de génération de la clé d'authentification à l'aide de la fonction de dérivation de clé sélectionnée.

9. Élément de réseau selon la revendication 8, dans lequel
la classe du réseau de radiocommunication est déterminée d'après un identifiant de réseau du réseau de radiocommunication inclus dans le message.

10. Élément de réseau selon la revendication 8 ou 9, dans lequel
l'entité de gestion est une macro-entité de gestion du réseau de radiocommunication public ou une entité locale de gestion d'un réseau de radiocommunication isolé.

11. Élément de réseau selon l'une quelconque des revendications 8 à 10, dans lequel
l'élément de réseau est un serveur d'abonné résidentiel, et
le message est une demande d'un vecteur d'authentification,
et dans lequel l'appareil comprend en outre :
un moyen de transmission de la clé d'authentification à l'entité de gestion.

12. Élément de réseau selon l'une quelconque des revendications 8 à 10, dans lequel
l'élément de réseau est un équipement utilisateur, et le message reçu depuis l'entité de réseau est une demande d'authentification d'utilisateur.

13. Élément de réseau selon la revendication 12, dans lequel
la demande d'authentification d'utilisateur inclut un jeton d'authentification généré par un serveur, et
dans lequel l'appareil comprend en outre :
un moyen de construction d'une réponse d'authentification d'après la clé d'authentification générée et le jeton d'authentification, et
un moyen de transmission de la réponse d'authentification construite à l'entité de gestion.

14. Produit-programme d'ordinateur incluant un programme pour un dispositif de traitement, comprenant des portions de code logiciel destinées à réaliser le procédé selon l'une quelconque des revendications 1 à 7 lorsque le programme est exécuté sur le dispositif de traitement.
